Europäisches Patentamt

European Patent Office

Office européen des brevets

(19)

(11) **EP 1 199 653 A1**

(12) **EUROPÄISCHE PATENTANMELDUNG**

(43) Veröffentlichungstag:
**24.04.2002 Patentblatt 2002/17**

(51) Int Cl.7: **G06F 17/60**

(21) Anmeldenummer: **00810963.9**

(22) Anmeldetag: **18.10.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **ABB RESEARCH LTD.**
**8050 Zürich (CH)**

(72) Erfinder: **Poncet, Andreas**
**8040 Zürich (CH)**

(74) Vertreter: **ABB Patent Attorneys**
**c/o ABB Schweiz AG**
**Brown Boveri Strasse 6**
**5400 Baden (CH)**

(54) **System und Verfahren zur automatischen Bestimmung eines sich aus mehreren unabhängigen Risikofaktoren ergebenden Gesamtrisikos**

(57) Verfahren und System (1) zur automatischen Bestimmung eines sich aus mehreren unabhängigen Risikofaktoren ergebenden Gesamtrisikos, in denen jeweils für eine entgegengenommene Wahrscheinlichkeitsdichtefunktion eines unabhängigen Risikofaktors eine Fast Fourier Transformation (FFT) mittels eines FFT-Prozessormoduls (4) berechnet wird, in denen die transformierten Wahrscheinlichkeitsdichtefunktionen der unabhängigen Risikofaktoren mittels eines Multiplikationsmoduls (5) miteinander multipliziert werden, und in denen mittels eines IFFT-Prozessormoduls (6) eine zur Wahrscheinlichkeitsdichtefunktion des Gesamtrisikos proportionale Wahrscheinlichkeitsdichtefunktion berechnet wird, indem für das vom Multiplikationsmodul (5) berechnete Produkt eine inverse FFT-Transformation berechnet wird. Vorzugsweise werden Wahrscheinlichkeitsdichtefunktionen jeweils durch einen Wahrscheinlichkeitsdichtevektor repräsentiert, wobei die Vektorelemente eines Wahrscheinlichkeitsdichtevektors jeweils äquidistanten Abtastwerten der betreffenden Wahrscheinlichkeitsdichtefunktion entsprechen.

FIG. 1

EP 1 199 653 A1

**Beschreibung**

Technisches Gebiet

Die vorliegende Erfindung betrifft ein System und ein Verfahren zur automatischen Bestimmung eines sich aus mehreren unabhängigen Risikofaktoren ergebenden Gesamtrisikos. Insbesondere betrifft die vorliegende Erfindung ein System und ein Verfahren zur automatischen Bestimmung eines sich aus mehreren unabhängigen Risikofaktoren ergebenden Gesamtrisikos gemäss dem Oberbegriff des unabhängigen Systemanspruchs, beziehungsweise gemäss dem Oberbegriff des unabhängigen Verfahrensanspruchs.

Stand der Technik

Insbesondere während des letzten Jahrzehnts haben sich die Anzahl und die Grösse von Aktiva von Firmen und Organisationen ständig erhöht, wodurch sich entsprechend auch potentielle Schäden und finanzielle Verluste ständig erhöht haben, wie verschiedene Umweltereignisse sowie Ereignisse wirtschaftlicher, politischer und technischer Natur auf dramatische Art gezeigt haben.

Risikoabschätzungen gewinnen mehr und mehr auch ausserhalb den Gebieten des Finanzwesens und des Versicherungswesens an Bedeutung. Dazu tragen auch die zunehmende Globalisierung und die sich immer rascher entwickelnde und verbreitende Technologie bei, die zu einer Erhöhung von internationalen Abhängigkeiten und einer Zunahme der Komplexität technologischer Verknüpfungen führen. Ein wichtiger Teil des Risikomanagements ist die quantitative Risikoanalyse basierend auf effizienten mathematischen Methoden. Dabei besteht das Problem insbesondere darin, das sich aus einer Kombination von mehreren unabhängigen Risikofaktoren ergebende Gesamtrisiko abzuschätzen, um sich optimal gegen mögliche Verluste abzusichern.

Wenn eine Anzahl unabhängiger Risikofaktoren betrachtet wird, die jeweils einem möglichen Einzelverlust entsprechen, der auf Grund eines eintretenden Umweltereignisses oder eines Ereignisses wirtschaftlicher, politischer oder technischer Natur verursacht wird, dann ergibt sich der mögliche Gesamtverlust aus der Summe dieser möglichen Einzelverluste. Um abzuschätzen, welchem Gesamtrisiko man ausgesetzt ist, berechnet man beispielsweise die Wahrscheinlichkeit, dass der Gesamtverlust einen bestimmten Wert nicht übersteigt. Auch wenn ein Durchschnittswert eines Gesamtverlusts einfach durch die Addition der Durchschnittswerte der einzelnen Verluste berechnet werden kann, gilt dies nicht für die entsprechenden Wahrscheinlichkeitsdichtefunktionen (Wahrscheinlichkeitsverteilungen), da diese nicht addierbar sind.

Für die Abschätzung des sich aus mehreren unabhängigen Risikofaktoren ergebenden Gesamtrisikos sind gegenwärtig mehrere automatisierte (Computer-basierte) Systeme für die Risikoabschätzung verfügbar. Diese herkömmlichen Systeme für die Risikoabschätzung verwenden die sogenannte "Monte Carlo"-Simulationsmethode ("Monte Carlo Simulation Method") zur Berechnung des Gesamtrisikos.

Die "Monte Carlo"-Simulationsmethode ist eine stochastische und iterative Methode, in der eine grosse Anzahl Szenarien berechnet werden, wobei für jedes der Szenarien ein Satz von Risikofaktoren durch einen Zufallsprozess bestimmt wird. Dieser Zufallsprozess ist so ausgeführt, dass die individuellen Wahrscheinlichkeitsverteilungen (Wahrscheinlichkeitsdichtefunktionen) der Risikofaktoren berücksichtigt werden. Für jedes der Szenarien wird der Wert des Gesamtverlusts durch Summierung der Einzelverluste berechnet und abgespeichert. Abschliessend wird als Annäherung an die unbekannte Wahrscheinlichkeitsverteilung des Gesamtrisikos aus den geordneten Resultaten der simulierten Szenarien ein Histogramm erstellt.

Systeme, die auf der "Monte Carlo"-Simulationsmethode basiert sind, weisen allerdings verschiedene Nachteile auf. Ein erster Nachteil der "Monte Carlo" basierten Systeme liegt darin, dass die Risikofaktoren in der Praxis nicht einfach klassischen Verteilungsmodellen, wie beispielsweise eine Gauss-, Exponential- oder Poissonverteilung, entsprechen und die Anpassung eines Zufallsgenerators an spezifische, nicht analytisch definierte Wahrscheinlichkeitsverteilungen (Wahrscheinlichkeitsdichtefunktionen) typischerweise sehr rechenintensiv und folglich zeitaufwendig und kostspielig ist.

Ein weiterer Nachteil der "Monte Carlo"-basierten Systeme besteht darin, dass typischerweise eine sehr grosse Anzahl Szenarien berechnet werden muss bevor die Konvergenz des Histogramms an die unbekannte Wahrscheinlichkeitsverteilung als ausreichend akzeptiert werden kann. Tatsächlich verbessert sich die Genauigkeit nur sehr langsam: für eine Verbesserung der Genauigkeit um den Faktor f, beispielsweise zehn, muss die Anzahl Iterationen, das heisst die Anzahl Szenarien, um den Faktor $f^2$ erhöht werden, also im vorliegenden Beispiel um den Faktor hundert.

Schliesslich besteht ein wesentlicher Nachteil der "Monte Carlo"-basierten Systeme darin, dass deren Genauigkeit insbesondere für die dramatischsten Ereignisse, das heisst Ereignisse mit kleinen Wahrscheinlichkeiten, verschlechtert wird. Das heisst folglich, dass in "Monte Carlo"-basierten Systemen für die genügend genaue Simulation von seltenen aber bedeutenden Ereignissen nochmals beträchtlich mehr zusätzliche Iterationen notwendig sind, was zur weiteren Erhöhung der Rechenintensität, des Zeitaufwands und somit der Kosten führt.

Darstellung der Erfindung

Es ist eine Aufgabe der vorliegenden Erfindung, ein neues und besseres System sowie ein neues und besseres Verfahren zur automatischen Bestimmung eines sich aus mehreren unabhängigen Risikofaktoren ergebenden Gesamtrisikos vorzuschlagen, welche insbesondere nicht die Nachteile des Stands der Technik aufweisen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Diese Ziele werden durch die vorliegende Erfindung insbesondere dadurch erreicht, dass jeweils für eine entgegengenommene Wahrscheinlichkeitsdichtefunktion (Wahrscheinlichkeitsverteilung) eines unabhängigen Risikofaktors eine Fast Fourier Transformation (FFT) mittels eines FFT-Prozessormoduls berechnet wird, dass die transformierten Wahrscheinlichkeitsdichtefunktionen der unabhängigen Risikofaktoren mittels eines Multiplikationsmoduls miteinander multipliziert werden, und dass mittels eines IFFT-Prozessormoduls (Inverse Fast Fourier Transformation) eine zur Wahrscheinlichkeitsdichtefunktion des Gesamtrisikos proportionale Wahrscheinlichkeitsdichtefunktion berechnet wird, indem für das vom Multiplikationsmodul berechnete Produkt eine inverse FFT-Transformation berechnet wird. Der Vorteil dieser Lösung zur automatischen Bestimmung eines sich aus mehreren unabhängigen Risikofaktoren ergebenden Gesamtrisikos besteht insbesondere darin, dass sie nicht iterativ ist und folglich die Genauigkeit des Resultats nicht von einer Anzahl von Iterationen abhängig ist. Ein weiterer Vorteil der hier vorgeschlagenen Lösung besteht darin, dass keine aufwendigen Zufallsprozesse verwendet werden, die rechenintensiv an nicht analytisch definierte Wahrscheinlichkeitsdichtefunktionen (Wahrscheinlichkeitsverteilungen) angepasst werden, sondern dass die Bestimmung des sich aus mehreren unabhängigen Risikofaktoren ergebenden Gesamtrisikos auf einer direkten Berechnung aus den individuellen Wahrscheinlichkeitsdichtefunktionen der unabhängigen Risikofaktoren beruht. Schliesslich weist die vorgeschlagene Lösung zur automatischen Bestimmung eines sich aus mehreren unabhängigen Risikofaktoren ergebenden Gesamtrisikos den Vorteil auf, dass sie mit herkömmlichen FFT-Prozessormodulen ausführbar ist, die insbesondere aus dem Gebiet der digitalen Signalverarbeitung bekannt sind. Dies trifft auch für das IFFT-Prozessormodul zu, da IFFT-Prozessormodule hinsichtlich Operatoren und Operandenregister dieselbe Struktur aufweisen wie FFT-Prozessormodule.

In einer bevorzugten Ausführungsvariante werden die Wahrscheinlichkeitsdichtefunktionen im System zur Ausführung des hier vorgeschlagenen Verfahrens jeweils durch einen Wahrscheinlichkeitsdichtevektor repräsentiert, wobei die Vektorelemente eines Wahrscheinlichkeitsdichtevektors jeweils äquidistanten Abtastwerten der betreffenden Wahrscheinlichkeitsdichtefunktion entsprechen. In dieser bevorzugten Ausführungsvariante wird durch ein FFT-Länge-Optimierungsmodul die Summe der Vektorlängen der Wahrscheinlichkeitsdichtevektoren der unabhängigen Risikofaktoren berechnet, der Wert der kleinsten Zweierpotenz bestimmt, die grösser als diese berechnete Summe ist, und die Vektorlänge der Wahrscheinlichkeitsdichtevektoren der unabhängigen Risikofaktoren auf diesen Wert der Zweierpotenz erhöht, wobei zusätzliche Vektorelemente mit dem Wert Null (in die Wahrscheinlichkeitsdichtevektoren) hinzugefügt werden. Der Vorteil, die Wahrscheinlichkeitsdichtevektoren auf die genannte Länge zu verlängern, besteht insbesondere darin, dass einerseits die auf dem Gebiet der digitalen Signalverarbeitung bekannten Aliasing-Probleme vermieden werden können, und andererseits, dass für FFT-Längen mit einer Zweierpotenz ein besonders schneller FFT-Algorithmus, beispielsweise Radix-2, verwendet werden kann.

Kurze Beschreibung der Zeichnungen

Nachfolgend wird eine Ausführung der vorliegenden Erfindung anhand eines Beispieles beschrieben. Das Beispiel der Ausführung wird durch folgende einzige beigelegte Figur illustriert:

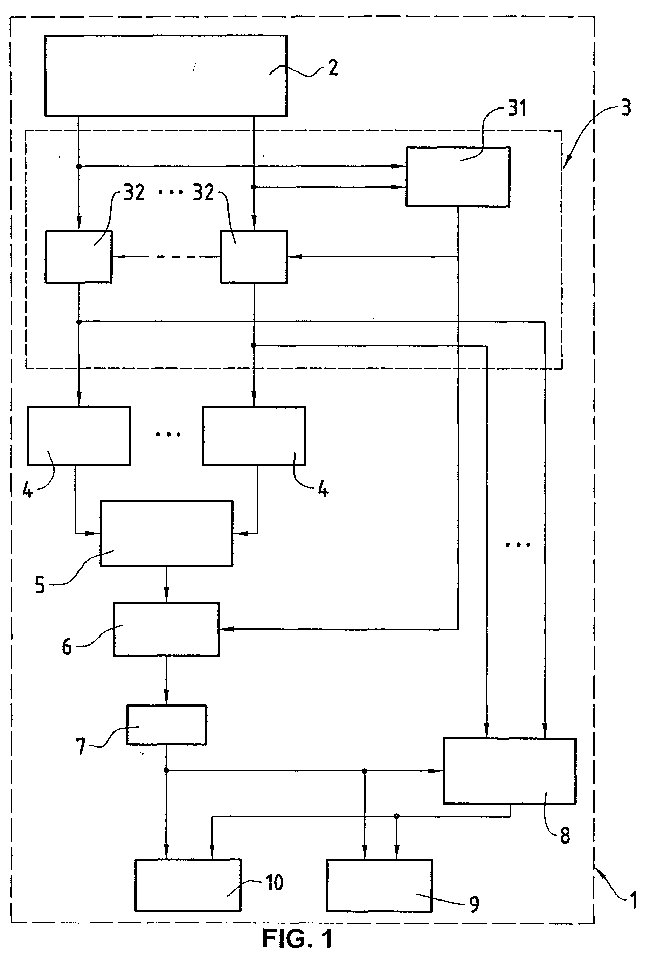

Figur 1 zeigt ein Blockdiagramm, welches schematisch ein System zur automatischen Bestimmung eines sich aus mehreren unabhängigen Risikofaktoren ergebenden Gesamtrisikos darstellt, welches System ein Eingangsschnittstellenmodul, ein FFT-Länge-Optimierungsmodul, mehrere FFT-Prozessormodule, ein Multiplikationsmodul, ein IFFT-Prozessormodul, ein Skalierungsmodul, ein Integrationsmodul, ein Anzeigemodul sowie ein Ausgangsmodul umfasst.

Wege zur Ausführung der Erfindung

Ausgehend von einem einfachen Fall mit zwei unabhängigen Risikofaktoren *X, Z,* aus dem der allgemeine Fall mit n unabhängigen Risikofaktoren ableitbar ist, wird in den nächsten Abschnitten aufgezeigt, dass die Fast Fourier Transformation (FFT) für die Bestimmung von sich aus mehreren unabhängigen Risikofaktoren ergebenden Gesamtrisikos verwendet werden kann, respektive dass FFT-Prozessormodule für die Berechnung der Wahrscheinlichkeitsverteilung (Wahrscheinlichkeitsdichtefunktionen) eines sich aus mehreren unabhängigen Risikofaktoren ergebenden Gesamtrisikos verwendet werden können.

Es sei angenommen, dass die Risikofaktoren $X, Z$ mit einer endlichen Auflösung $\Delta$ abgetastet werden, das heisst die Risikofaktoren $X$ und $Z$ die Werte 0, $\Delta$, $2\Delta$, $3\Delta$, ... annehmen können.

Für die Werte $k = 0, 1, 2, ...$ seien zudem die Wahrscheinlichkeiten $\alpha_k$ und $\beta_k$ so definiert, dass:

$$P(X = k\Delta) = \alpha_k$$

$$P(Z = k\Delta) = \beta_k$$

Für den sich aus den Risikofaktoren $X$ und $Z$ ergebenden Gesamtverlust $Y = X + Z$ sei die Wahrscheinlichkeit:

$$\gamma_k \overset{\wedge}{=} P(Y = k\Delta)$$

Wegen der Unabhängigkeit der Risikofaktoren $X$ und $Z$ gilt:

$$\gamma_k = P(X + Z = k\Delta) = \sum_l P(X = l\Delta)P(Z = (k - l)\Delta \mid X = l\Delta)$$

$$\gamma_k = \sum_l P(X = l\Delta)P(Z = (k - l)\Delta) = \sum_l \alpha_l \beta_{k-l}$$

Für die $N$-Punkt Fast Fourier Transformation (FFT) der Sequenz $\gamma_0, ..., \gamma_{N-1}$ ergibt sich:

$$FFT\{\gamma_k\}(n) = \sum_k \gamma_k e^{-j2\pi nk/N} = \sum_k \sum_l \alpha_l \beta_{k-l} e^{-j2\pi nk/N}$$

$$= \sum_k \sum_l \alpha_l e^{-j2\pi nl/N} \beta_{k-l} e^{-j2\pi n(k-l)/N} = \left(\sum_l \alpha_l e^{-j2\pi nl/N}\right)\left(\sum_k \beta_k e^{-j2\pi nk/N}\right)$$

$$= FFT\{\alpha_l\}(n)\, FFT\{\beta_k\}(n).$$

Daraus folgt für die Berechnung der Wahrscheinlichkeit:

$$\gamma_k = IFFT\{FFT\{\alpha_l\}(n)FFT\{\beta_k\}(n)\},$$

wobei IFFT die Inverse Fast Fourier Transformation ist. Wegen $\gamma_k \cong p_Y(k\Delta)\Delta$, entspricht die erhaltene Sequenz $S_Y = \gamma_0 / \Delta, ..., \gamma_{N-1} / \Delta$ der diskreten Wahrscheinlichkeitsdichtefunktion des sich aus den unabhängigen Risikofaktoren ergebenden Gesamtrisikos.

In der Figur 1 bezieht sich die Bezugsziffer 1 auf das System für die Bestimmung von sich aus mehreren unabhängigen Risikofaktoren ergebenden Gesamtrisikos, welches System 1 die diskrete Wahrscheinlichkeitsdichtefunktion $S_Y$ des sich aus den unabhängigen Risikofaktoren ergebenden Gesamtrisikos wie oben gezeigt mittels FFT und IFFT berechnet. Wie in der Figur 1 dargestellt wird umfasst das System 1 mehrere Module 2 bis 10, die beispielsweise als programmierte Softwaremodule auf einem gemeinsamen Computer oder auf mehreren miteinander verbundenen Computern ausgeführt werden, die jeweils einen oder mehrere Prozessoren umfassen. Die programmierten Softwaremodule sind beispielsweise als Computerprogrammcode auf einem computerlesbaren Medium gespeichert. Wie in den folgenden Abschnitten zum Teil explizit erläutert wird ist es auch möglich, mindestens gewisse der Module 2 bis 10 teilweise oder vollständig, einzeln oder miteinander kombiniert hardwaremässig auszuführen und/oder wenigstens für gewisse Module spezielle Prozessoren, beispielsweise Signalverarbeitungsprozessoren, zu verwenden.

Das System 1 verfügt über ein Eingangsschnittstellenmodul 2 zum Entgegennehmen von Wahrscheinlichkeitsdichtefunktionen (Wahrscheinlichkeitsverteilungen) für jeden unabhängigen Risikofaktor, der in der Bestimmung des Gesamtrisikos berücksichtigt werden soll. Das Eingangsschnittstellenmodul 2 umfasst beispielsweise ein Modul zur Aufnahme von Datenträgern, ein Datenterminal zur Dateneingabe oder eine Datenkommunikationsschnittstelle für den Datenaustausch. Die Wahrscheinlichkeitsverteilungen der unabhängigen Risikofaktoren werden im System 1 jeweils als Wahrscheinlichkeitsdichtevektoren $R_n$ repräsentiert, wobei die Vektorelemente $r_{n1}, ..., r_{nm}$ eines Wahrscheinlichkeitsdichtevektors $R_n$ jeweils m äquidistanten Abtastwerten der betreffenden Wahrscheinlichkeitsdichtefunktion entsprechen. Die Wahrscheinlichkeitsdichtevektoren $R_n$ der unabhängigen Risikofaktoren werden entweder direkt dem Eingangsschnittstellenmodul 2 übergeben oder sie werden im Eingangsschnittstellenmodul 2 (durch Abtastung) aus den Wahrscheinlichkeitsdichtefunktion der betreffenden unabhängigen Risikofaktoren generiert.

Vom Eingangsschnittstellenmodul 2 werden die Wahrscheinlichkeitsdichtevektoren $R_n$ der unabhängigen Risikofaktoren dem FFT-Länge-Optimierungsmodul 3 übergeben. Mittels eines FFT-Länge-Berechnungsmoduls 31 des FFT-Länge-Optimierungsmoduls 3 wird die Summe L sämtlicher Vektorlängen $I_n$ der Wahrscheinlichkeitsdichtevektoren $R_n$ der unabhängigen Risikofaktoren berechnet und der Wert der kleinsten Zweierpotenz $k=2^p$ bestimmt, die grösser als die berechnete Summe L ist. Mittels eines oder mehrerer Vektorverlängerungsmodule 32 des FFT-Länge-Optimierungsmoduls 3 werden die Vektorlängen von jedem der Wahrscheinlichkeitsdichtevektoren $R_n$ der unabhängigen Risikofaktoren auf diesen Wert der Zweierpotenz $k=2^p$ erhöht, wobei zusätzliche Vektorelemente $r_{nm+1}...r_{nk}$ mit dem Wert Null hinzugefügt werden (zero padding).

Vom FFT-Länge-Optimierungsmodul 3 werden die verlängerten Wahrscheinlichkeitsdichtevektoren $R_n$ der unabhängigen Risikofaktoren jeweils sequentiell einem FFT-Prozessormodul 4 oder vorzugsweise parallel mehreren FFT-Prozessormodulen 4 zugeführt. Die FFT-Prozessormodule 4 können jeweils als spezielle Hardwareschaltungen, beispielsweise (in einen Chip) integriert, ausgeführt werden oder sie können als programmierte Softwaremodule auf einem speziellen Signalverarbeitungsprozessor ausgeführt werden oder sie können als programmierte Softwaremodule auf einem Prozessor eines herkömmlichen Computers ausgeführt werden. Mittels der FFT-Prozessormodule 4 werden für die Wahrscheinlichkeitsdichtevektoren $R_n$ der unabhängigen Risikofaktoren jeweils Fast Fourier Transformationen berechnet und die resultierenden transformierten Vektoren, die komplexe Werte umfassen, in einer sequentiellen Ausführung der FFT-Prozessormodule 4 zwischengespeichert oder in einer parallelen Ausführung mehrerer FFT-Prozessormodule 4 an das nächstfolgende Modul 5 weitergetaktet. Auf Grund der vorgängigen Verlängerung der Wahrscheinlichkeitsdichtevektoren $R_n$ der unabhängigen Risikofaktoren auf eine Zweierpotenz $k=2^p$ können die FFT-Prozessormodule 4 basierend auf besonders schnellen FFT-Algorithmen, beispielsweise Radix-2, ausgeführt werden.

Die FFT-transformierten Wahrscheinlichkeitsdichtevektoren der unabhängigen Risikofaktoren werden direkt oder über Zwischenspeicher (z.B. Register) dem Multiplikationsmodul 5 zugeführt. Das Multiplikationsmodul 5 kann als spezielle Hardwareschaltung, beispielsweise integriert, zum Beispiel zusammen mit den FFT-Prozessormodulen 4, ausgeführt werden oder es kann als programmiertes Softwaremodul auf einem herkömmlichen Prozessor ausgeführt werden. Durch das Multiplikationsmodul 5 werden die FFT-transformierten Wahrscheinlichkeitsdichtevektoren der unabhängigen Risikofaktoren elementweise multipliziert, so dass ein Vektor resultiert, dessen Elemente der elementweisen Multiplikation der entsprechenden Elemente der transformierten Wahrscheinlichkeitsdichtevektoren entsprechen (zum Beispiel ergibt die elementweise Multiplikation eines Vektors U, mit den Elementen $u_1$ und $u_2$, und eines Vektors V, mit den Elementen $v_1$ und $v_2$, den Vektor W, mit den Elementen $u_1v_1$ und $u_2v_2$).

Der aus dem Multiplikationsmodul 5 resultierende Vektor wird vom Multiplikationsmodul 5 dem IFFT-Prozessormodul 6 zugeführt, welches dafür eine inverse Fast Fourier Transformation ausführt. Das IFFT-Prozessormodul 6 weist hinsichtlich Operatoren und Operandenregister dieselbe Struktur auf wie die FFT-Prozessormodule 4 und kann folglich wie oben für die FFT-Prozessormodule 4 beschrieben ausgeführt werden. Die Elemente des aus dem IFFT-Prozessormodul 6 resultierenden invers-transformierten Vektors sind proportional zu den Werten der oben hergeleiteten diskreten Wahrscheinlichkeitsdichtefunktion $S_Y$ des sich aus den unabhängigen Risikofaktoren ergebenden Gesamtrisikos und werden im Skalierungsmodul 7 entsprechend skaliert. Bei einer äquidistanten Abtastung der unabhängigen Risikofaktoren, respektive der diesen unabhängigen Risikofaktoren zugeordneten Wahrscheinlichkeitsdichtefunktionen, mit der endlichen Auflösung $\Delta$ (wie oben angegeben) weist der Skalierungsfaktor des Skalierungsmoduls 7 den Wert $\Delta^{n-1}$ auf, wobei "n" die Anzahl unabhängiger Risikofaktoren betrifft. Die Elemente des aus dem Skalierungsmodul 7 resultierenden Wahrscheinlichkeitsdichtevektors $R_Y$ entsprechen den Werten der oben hergeleiteten diskreten Wahrscheinlichkeitsdichtefunktion $S_Y$ des sich aus den unabhängigen Risikofaktoren ergebenden Gesamtrisikos.

Wie in der Figur 1 illustriert wird, können der Wahrscheinlichkeitsdichtevektor $R_Y$ des sich aus den unabhängigen Risikofaktoren ergebenden Gesamtrisikos sowie die Wahrscheinlichkeitsdichtevektoren $R_1$ bis $R_n$ zur Auswertung dem Integrationsmodul 8 zugeführt werden. Das Integrationsmodul 8 berechnet für die Wahrscheinlichkeitsdichtevektoren jeweils "integrierte" Vektoren, deren Elemente sich jeweils aus der kumulativen Summe der Elemente des betreffenden Wahrscheinlichkeitsdichtevektors berechnet werden (zum Beispiel ergibt die Integration eines Vektors V, mit den Elementen $v_1$, $v_2$ und $v_3$, durch das Integrationsmodul 8 den resultierenden Vektor Vi, mit den Elementen $v_1$, $v_1+v_2$ und $v_1+v_2+v_3$). Das Integrationsmodul 8 berechnet also die sich aus den Wahrscheinlichkeitsdichtevektoren ergebenden Perzentile, die zur Abschätzung von Verlustwerten bei gegebenen Wahrscheinlichkeiten verwendet werden können. Für die Bestimmung des möglichen Gesamtverlusts für eine gegebene Wahrscheinlichkeit kann der "in-

**EP 1 199 653 A1**

tegrierte" Wahrscheinlichkeitsdichtevektor $R_Y$ des sich aus den unabhängigen Risikofaktoren ergebenden Gesamtrisikos verwendet werden, wobei sich der Wert des möglichen Gesamtverlusts durch Addition der durch die unabhängigen Risikofaktoren bestimmten Einzelverluste ergibt. Für die Bestimmung des Einflusses einzelner Risikofaktoren auf einen möglichen Gesamtverlust für eine gegebene Wahrscheinlichkeit können die "integrierten" Wahrscheinlichkeitsdichtevektoren $R_1$ bis $R_n$ verwendet werden. Dabei kann für eine gegebene Wahrscheinlichkeit dasjenige Element (oder der Index auf dasjenige Element) des "integrierten" Wahrscheinlichkeitsdichtevektors bestimmt werden, das der gewünschten Wahrscheinlichkeit gleich oder am nächsten kommt (zum Beispiel ergibt sich für einen Risikofaktor r mit den möglichen Verlustwerten "a", "b", "c", "d" und "e", den dazugehörenden Wahrscheinlichkeitsdichtevektor V, mit den Elementen 0.2, 0.4, 0.3, 0.05 und 0.05, sowie den dazugehörenden "integrierten" Wahrscheinlichkeitsdichtevektor Vi, mit den Elementen 0.2, 0.6, 0.9, 0.95 und 1.0, für eine gegebene Wahrscheinlichkeit von 95% das vierte Element "0.95" des "integrierten" Wahrscheinlichkeitsdichtevektors als das nächstliegende Element und somit der vierte mögliche Verlustwert "d" des Risikofaktors r als das gesuchte Quantil, das heisst mit einer 95%-igen Wahrscheinlichkeit ergibt sich gemäss dem Risikofaktor r ein Verlustwert nicht grösser als "d").

Wie in der Figur 1 dargestellt wird umfasst das System 1 zudem ein Anzeigemodul 9, welches die bestimmten Resultate für einen Benutzer des Systems 1 beispielsweise in graphischer und/oder numerischer Form auf einem Bildschirm darstellt und/oder ausdruckt. Das Anzeigemodul 9 stellt beispielsweise den berechneten Wahrscheinlichkeitsdichtevektor $R_Y$ des sich aus den unabhängigen Risikofaktoren ergebenden Gesamtrisikos, die "integrierten" Wahrscheinlichkeitsdichtevektoren $R_1$ bis $R_n$ und $R_Y$, sowie die Einflüsse der einzelnen unabhängigen Risikofaktoren auf das Gesamtrisiko dar. Insbesondere wenn zahlreiche unabhängige Risikofaktoren berücksichtigt werden müssen, können die Einflüsse der einzelnen unabhängigen Risikofaktoren auf das Gesamtrisiko beispielsweise durch ein nicht dargestelltes Auswertungsmodul des Systems 1, beispielsweise ein programmiertes Softwaremodul, bestimmt und zur besseren Übersicht für Benutzer des Systems 1 beispielsweise entsprechend dem Anteil ihres Einflusses sortiert werden. Mittels des Ausgangsmoduls 10 können die bestimmten Resultate zudem vom System 1 an Einheiten ausserhalb des Systems 1 weitergeleitet werden. Das Ausgangsmodul 10 umfasst beispielsweise ein Modul zur Aufnahme von Datenträgern oder eine Datenkommunikationsschnittstelle für den Datenaustausch.

Das vorgeschlagene System und Verfahren zur automatischen Bestimmung eines sich aus mehreren unabhängigen Risikofaktoren ergebenden Gesamtrisikos kann beispielsweise auch als Werkzeug für die Entscheidungshilfe, insbesondere für die Echtzeit-Entscheidungshilfe (real-time decision support), eingesetzt werden, wobei als Anwendungsgebiete neben Finanz- und Energiemärkten (zum Beispiel für den Handel in diesen Gebieten) beispielsweise auch komplexe technische Systeme, beispielsweise Systeme der Informationstechnologie und/oder der Telekommunikation, oder Kraftwerksysteme, erwähnt werden sollen.

Bezugszeichenliste

1     System

2     Eingangsschnittstellenmodul

3     FFT-Länge-Optimierungsmodul

4     FFT-Prozessormodul

5     Multiplikationsmodul

6     IFFT-Prozessormodul

7     Skalierungsmodul

8     Integrationsmodul

9     Anzeigemodul

10    Ausgangsmodul

31    FFT-Länge-Berechnungsmodul

32    Vektorverlängerungsmodul

**Patentansprüche**

1.  System (1) zur automatischen Bestimmung eines sich aus mehreren unabhängigen Risikofaktoren ergebenden Gesamtrisikos, welches System (1) ein Eingangsschnittstellenmodul (2) umfasst zum Entgegennehmen von Wahrscheinlichkeitsdichtefunktionen, die jeweils einem der unabhängigen Risikofaktoren zugeordnet sind, **dadurch gekennzeichnet,**

    **dass** das System (1) mindestens ein FFT-Prozessormodul (4) umfasst, welches so eingerichtet ist, dass es für eine entgegengenommene Wahrscheinlichkeitsdichtefunktionen eines unabhängigen Risikofaktors eine FFT-Transformation berechnet,

    **dass** das System (1) ein Multiplikationsmodul (5) umfasst, welches so eingerichtet ist, dass es die transformierten Wahrscheinlichkeitsdichtefunktionen der unabhängigen Risikofaktoren miteinander multipliziert, und

    **dass** das System (1) ein IFFT-Prozessormodul (6) umfasst, welches so eingerichtet ist, dass es eine zur Wahrscheinlichkeitsdichtefunktion des Gesamtrisikos proportionale Wahrscheinlichkeitsdichtefunktion berechnet, indem es für das vom Multiplikationsmodul (5) berechnete Produkt eine inverse FFT-Transformation berechnet.

2.  System (1) gemäss Anspruch 1, **dadurch gekennzeichnet, dass** es so eingerichtet ist, dass Wahrscheinlichkeitsdichtefunktionen im System (1) jeweils durch einen Wahrscheinlichkeitsdichtevektor repräsentiert werden, wobei die Vektorelemente eines Wahrscheinlichkeitsdichtevektors jeweils äquidistanten Abtastwerten der betreffenden Wahrscheinlichkeitsdichtefunktion entsprechen, dass das FFT-Prozessormodul (4) so eingerichtet ist, dass es das Resultat der FFT-Transformation eines Wahrscheinlichkeitsdichtevektors im System (1) jeweils als Vektor repräsentiert, und dass das Multiplikationsmodul (5) so eingerichtet ist, dass es das berechnete Produkt im System (1) als Vektor repräsentiert, dessen Vektorelemente durch elementweise Multiplikation der transformierten Wahrscheinlichkeitsdichtevektoren berechnet werden.

3.  System (1) gemäss Anspruch 2, **dadurch gekennzeichnet, dass** es ein FFT-Länge-Optimierungsmodul (3) umfasst, welches so eingerichtet ist, dass es die Summe der Vektorlängen der Wahrscheinlichkeitsdichtevektoren der unabhängigen Risikofaktoren berechnet, dass es den Wert der kleinsten Zweierpotenz bestimmt, die grösser als die berechnete Summe ist, und dass es die Vektorlänge der Wahrscheinlichkeitsdichtevektoren der unabhängigen Risikofaktoren auf diesen Wert der Zweierpotenz erhöht, wobei zusätzliche Vektorelemente mit dem Wert Null hinzugefügt werden.

4.  System (1) gemäss einem der Ansprüche 2 oder 3, **dadurch gekennzeichnet, dass** es ein Skalierungsmodul (7) umfasst, welches so eingerichtet ist, dass es die zur Wahrscheinlichkeitsdichtefunktion des Gesamtrisikos proportionale Wahrscheinlichkeitsdichtefunktionen mit einem Wert skaliert, der auf der Äquidistanz basiert, mit der die Wahrscheinlichkeitsdichtevektoren durch Abtastung aus den Wahrscheinlichkeitsdichtefunktionen der unabhängigen Risikofaktoren bestimmt wurden.

5.  System (1) gemäss einem der Ansprüche 1 bis 4, **dadurch gekennzeichnet, dass** das IFFT-Prozessormodul (6) hinsichtlich Operatoren und Operandenregister dieselbe Struktur aufweist wie das FFT-Prozessormodul (4).

6.  Verfahren zur automatischen Bestimmung eines sich aus mehreren unabhängigen Risikofaktoren ergebenden Gesamtrisikos, in welchem Verfahren mittels eines Eingangsschnittstellenmoduls (2) Wahrscheinlichkeitsdichtefunktionen entgegengenommen werden, die jeweils einem der unabhängigen Risikofaktoren zugeordnet sind, **dadurch gekennzeichnet,**

    **dass** jeweils für eine entgegengenommene Wahrscheinlichkeitsdichtefunktionen eines unabhängigen Risikofaktors eine FFT-Transformation mittels eines FFT-Prozessormoduls (4) berechnet wird,

    **dass** die transformierten Wahrscheinlichkeitsdichtefunktionen der unabhängigen Risikofaktoren mittels eines Multiplikationsmoduls (5) miteinander multipliziert werden, und

**dass** mittels eines IFFT-Prozessormoduls (6) eine zur Wahrscheinlichkeitsdichtefunktion des Gesamtrisikos proportionale Wahrscheinlichkeitsdichtefunktion berechnet wird, indem für das vom Multiplikationsmodul (5) berechnete Produkt eine inverse FFT-Transformation berechnet wird.

7. Verfahren gemäss Anspruch 6, **dadurch gekennzeichnet, dass** Wahrscheinlichkeitsdichtefunktionen jeweils durch einen Wahrscheinlichkeitsdichtevektor repräsentiert werden, wobei die Vektorelemente eines Wahrscheinlichkeitsdichtevektors jeweils äquidistanten Abtastwerten der betreffenden Wahrscheinlichkeitsdichtefunktion entsprechen, dass das Resultat der FFT-Transformation eines Wahrscheinlichkeitsdichtevektors durch das FFT-Prozessormodul (4) jeweils als Vektor repräsentiert wird, und dass das berechnete Produkt durch das Multiplikationsmodul (5) als Vektor repräsentiert wird, dessen Vektorelemente durch elementweise Multiplikation der transformierten Wahrscheinlichkeitsdichtevektoren berechnet werden.

8. Verfahren gemäss Anspruch 7, **dadurch gekennzeichnet, dass** die Summe der Vektorlängen der Wahrscheinlichkeitsdichtevektoren der unabhängigen Risikofaktoren durch ein FFT-Länge-Optimierungsmodul (3) berechnet wird, dass durch das FFT-Länge-Optimierungsmodul (3) der Wert der kleinsten Zweierpotenz bestimmt wird, die grösser als die berechnete Summe ist, und dass die Vektorlänge der Wahrscheinlichkeitsdichtevektoren der unabhängigen Risikofaktoren durch das FFT-Länge-Optimierungsmodul (3) auf diesen Wert der Zweierpotenz erhöht wird, wobei zusätzliche Vektorelemente mit dem Wert Null hinzugefügt werden.

9. Verfahren gemäss einem der Ansprüche 7 oder 8, **dadurch gekennzeichnet, dass** die zur Wahrscheinlichkeitsdichtefunktion des Gesamtrisikos proportionale Wahrscheinlichkeitsdichtefunktion durch ein Skalierungsmodul (7) mit einem Wert skaliert wird, der auf der Äquidistanz basiert, mit der die Wahrscheinlichkeitsdichtevektoren durch Abtastung aus den Wahrscheinlichkeitsdichtefunktionen der unabhängigen Risikofaktoren bestimmt wurden.

10. Computerprogrammprodukt umfassend: ein computerlesbares Medium mit darin enthaltenen Computerprogrammcodemitteln zur Steuerung eines Computers, so dass der Computer sämtliche Schritte des Verfahrens gemäss einem der Ansprüche 6 bis 9 ausführt.

**FIG. 1**

Europäisches
Patentamt

**EUROPÄISCHER RECHERCHENBERICHT**

Nummer der Anmeldung

EP 00 81 0963

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | RUDOLF K. BOCK: "Auszüge aus: The Data Analysis Brief Book" INTERNET DOCUMENT, 'Online! 7. April 1998 (1998-04-07), Seite 1-4 XP002162782 Gefunden im Internet: <URL:http://rkb.home.cern.ch/rkb/titleA.gtml> 'gefunden am 2001-03-13! * Seite 3 - Seite 4 * | 1-10 | G06F17/60 |
| Y | ANONYM: "Risk Analysis for Spreadsheet-based Models" INTERNET DOCUMENT, 'Online! XP002162783 Gefunden im Internet: <URL:http://www.cybersophic.com/risk.html> 'gefunden am 2001-03-13! * Seite 1, Absatz 1 * * Seite 3, Absatz 5; Abbildung 4 * | 1-10 | |
| A | WO 00 46705 A (LOMBARD RISK MANAGEMENT PLC ;WISBEY JOHN MICHAEL (GB); ERL MIODRAG) 10. August 2000 (2000-08-10) * Zusammenfassung * * Seite 10, Zeile 25 - Seite 11, Zeile 3 * * Seite 11, Zeile 27 - Seite 11, letzte Zeile * * Seite 12, Zeile 4 - Zeile 16 * | 1-10 | **RECHERCHIERTE SACHGEBIETE (Int.Cl.7)** G06F |
| A | US 5 798 950 A (FITZGERALD JOSEPH MICHAEL) 25. August 1998 (1998-08-25) * Spalte 4, Zeile 3 - Spalte 4, Zeile 25 * * Spalte 4, Zeile 35 - Spalte 4, Zeile 54; Abbildung 2 * | 1-10 | |

Der vorliegende Recherchenbericht wurde für alle Patentansprüche erstellt

| Recherchenort | Abschlußdatum der Recherche | Prüfer |
|---|---|---|
| MÜNCHEN | 19. März 2001 | Platzer, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 00 81 0963

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-03-2001

| Im Recherchenbericht angeführtes Patentdokument | | Datum der Veröffentlichung | Mitglied(er) der Patentfamilie | | Datum der Veröffentlichung |
|---|---|---|---|---|---|
| WO 0046705 | A | 10-08-2000 | AU | 2305800 A | 25-08-2000 |
| US 5798950 | A | 25-08-1998 | KEINE | | |

Für nähere Einzelheiten zu diesem Anhang : siehe Amtsblatt des Europäischen Patentamts, Nr.12/82